# EUROPEAN PATENT APPLICATION

(11) **EP 4 625 703 A1**
(43) Date of publication of application: **01.10.2025**
(21) Application number: 23899890.0
(22) Date of filing: 01.12.2023
(51) Int. Cl.: H01Q 19/17, H01Q 19/18

(54) **FULL DUPLEX ANTENNA DEVICE AND COMMUNICATION SYSTEM**

(30) Priority: 06.12.2022 CN 202211559682
(71) Applicant: Huawei Technologies Co., Ltd., Shenzhen, Guangdong 518129 (CN)
(72) Inventor: LV, Jinsong, Shenzhen, Guangdong 518129 (CN); LI, Liang, Shenzhen, Guangdong 518129 (CN); ZHAO, Chunyu, Shenzhen, Guangdong 518129 (CN); CHEN, Zefeng, Shenzhen, Guangdong 518129 (CN); FU, Haibo, Shenzhen, Guangdong 518129 (CN)
(74) Representative: Maiwald GmbH
(86) International application number: PCT/CN2023/135851
(87) International publication number: WO 2024/120312

(57) **Abstract**

This application provides a full-duplex antenna apparatus and a communication system. The full-duplex antenna apparatus includes a primary reflector, an isolation plate, two secondary reflectors, and two feeds. The primary reflector has a first reflective surface. The isolation plate is disposed on one side of the first reflective surface and fastened to the first reflective surface, and divides the first reflective surface into two reflection zones. The two secondary reflectors are respectively disposed on two sides of the isolation plate. The two feeds are disposed on one side of the first reflective surface, and the two feeds are respectively located on two sides of the isolation plate. One of the two feeds is configured to transmit an electromagnetic wave signal to a receive end of a remote end, and the other feed is configured to receive an electromagnetic wave signal sent by a transmit end of the remote end. The isolation plate is configured to block transmission of electromagnetic wave signals between the two feeds. The full-duplex antenna apparatus has a feature of low loopback noise.

## Description

### CROSS-REFERENCE TO RELATED APPLICATIONS

This application claims priority to Chinese Patent Application No. 202211559682.0, filed with the China National Intellectual Property Administration on December 6, 2022 and entitled "FULL-DUPLEX ANTENNA APPARATUS AND COMMUNICATION SYSTEM", which is incorporated herein by reference in its entirety.

### TECHNICAL FIELD

This application relates to the field of communication devices, and specifically, to a full-duplex antenna apparatus and a communication system.

### BACKGROUND

Most existing communication systems use a half-duplex working manner. In other words, transmission and reception of electromagnetic wave signals of the system are implemented by occupying different frequency resources or time resources for signal communication. Although the half-duplex working manner can effectively avoid signal interference between transmitting and receiving, a waste of spectrum or time resources is caused, and a channel bandwidth and a communication rate of the communication system are limited. Theoretically, a channel capacity of the communication system may be doubled by implementing co-frequency co-time full duplex.

However, when an existing full-duplex technology is applied to a wireless communication system, a loopback noise problem exists. The loopback noise problem means that a transmitted signal is received by a receive antenna at a local end due to simultaneous reception and transmission of co-frequency signals. Because a distance from the receive antenna at the local end to a transmit antenna at the local end is far less than a distance from the receive antenna at the local end to a transmit antenna at a peer end, loopback noise power is far greater than wanted signal power. Excessive loopback noise causes a radio frequency module of the communication system to exceed a linear working range, resulting in nonlinear characteristics and an error in loopback channel estimation, and making it difficult to eliminate interference of the loopback noise.

### SUMMARY

This application provides a full-duplex antenna apparatus and a communication system, to reduce impact of loopback noise in a full-duplex working manner, and improve signal transmission precision in a full-duplex working state.

According to a first aspect, this application provides a full-duplex antenna apparatus, including a primary reflector, an isolation plate, two secondary reflectors, and two feeds. The primary reflector has a first reflective surface. The isolation plate is disposed on one side of the first reflective surface and fastened to the first reflective surface, and divides the first reflective surface into two reflection zones. The two secondary reflectors are disposed on one side of the first reflective surface, and the two secondary reflectors are respectively disposed on two sides of the isolation plate. The two feeds are disposed on one side of the first reflective surface, and the two feeds are respectively located on two sides of the isolation plate. One of the two feeds is configured to transmit an electromagnetic wave signal to a receive end of a remote end, and the other feed is configured to receive an electromagnetic wave signal sent by a transmit end of the remote end. The isolation plate is configured to block transmission of electromagnetic wave signals between the two feeds. In one of the reflection zones, the feed is configured to transmit, to the primary reflector, a to-be-transmitted electromagnetic wave signal that has been reflected by the secondary reflector in the reflection zone, and the primary reflector sends the to-be-transmitted electromagnetic wave signal to the remote end. In the other reflection zone, the primary reflector is configured to transmit, to the feed in the reflection zone, an electromagnetic wave signal from the remote end that has been reflected by the secondary reflector in the reflection zone.

In the full-duplex antenna apparatus in this application, one of the two feeds is used as a transmit antenna and is configured to transmit an electromagnetic wave signal to the remote end, and the other is used as a receive antenna and is configured to receive an electromagnetic wave signal sent by the remote end. The two feeds are separated by the isolation plate. The isolation plate may block the transmission of the electromagnetic wave signals between the two feeds. The feeds implement signal transmission with the primary reflector by using the secondary reflectors respectively corresponding to the feeds. On a side of the feed used as the transmit antenna, after the feed used as the transmit antenna transmits a signal, the signal is reflected by the secondary reflector corresponding to the reflection zone, and then is transmitted to the outside by using the primary reflector corresponding to the reflection zone. On a side of the feed used as the receive antenna, the primary reflector in the reflection zone transmits the electromagnetic wave signal from the remote end to the secondary reflector, and then the secondary reflector reflects and transmits the electromagnetic wave signal to the feed used as the receive antenna. In this process, due to blocking of the isolation plate, the feed used as the receive antenna may avoid receiving the electromagnetic wave signal transmitted by the transmit antenna at a same end. Therefore, when the full-duplex antenna apparatus in this application implements co-frequency co-time signal transmission, loopback noise may be significantly reduced, and transmission precision in a full-duplex signal transmission process is improved.

In an optional implementation, the isolation plate and an aperture of the primary reflector are perpendicularly arranged, and the two reflection zones are symmetrically arranged along the isolation plate. In an optional implementation, the secondary reflectors are symmetrically arranged along the isolation plate. In an optional implementation, the two feeds are symmetrically arranged along the isolation plate. Therefore, the two secondary reflectors and the two feeds may form a mirror structure about the isolation plate, and antenna performance of the full-duplex antenna apparatus may be improved.

In an optional implementation, the primary reflector may be a rotating parabolic reflector, and the secondary reflectors may be rotating hyperbolic reflectors. The primary reflector has a first optical focus, and each of the secondary reflectors has two optical focuses.

Correspondingly, in any one of the reflection zones, the feed may be located at one optical focus of the secondary reflector, and the first optical focus of the primary reflector may coincide with the other optical focus of the secondary reflector. Therefore, a beam generated by the feed may form a parallel beam after being reflected by the secondary reflector and the primary reflector, so that a high-gain beam may be obtained. Alternatively, after being reflected by the primary reflector and the secondary reflector, a beam transmitted from the outside to the primary reflector may be converged to the feed and received by the feed, to improve obtained signal strength.

In an optional implementation, a connection line between the first optical focus and a dimple of either of the secondary reflectors is a first connection line, a connection line between the first optical focus and a geometric center of the primary reflector is a second connection line, and an included angle between the first connection line and the second connection line ranges from 10° to 30°. Because the feeds need to be installed at the optical focuses of the secondary reflector, when the included angle between the first connection line and the second connection line is less than 10°, a distance from the dimple of the secondary reflector to the isolation plate is short, and installation space of the feeds is limited, so that it is unfavorable to signal reflection and receiving. When the included angle between the first connection line and the second connection line is greater than 30°, a center of the entire secondary reflector is shifted outward, affecting reflection and transmission of a beam between the primary reflector and the secondary reflector. Therefore, when the included angle between the first connection line and the second connection line ranges from 10° to 30°, it is more conducive to reflection and transmission of beams between the primary reflector and each secondary reflector.

In an optional implementation, the two secondary reflectors can rotate around a rotation center in a plane perpendicular to a symmetric surface of the two secondary reflectors, and a straight-line distance between the rotation center and the first optical focus is less than or equal to 25 mm. In another optional implementation, the two secondary reflectors can rotate around the rotation center in the symmetric surface of the two secondary reflectors, and the straight-line distance between the rotation center and the first optical focus is less than or equal to 25 mm. Therefore, the two secondary reflectors may implement beam sweeping on a plane of the first reflective surface, and limit the distance between the rotation center and the first optical focus of the primary reflector, to improve beam sweeping performance. In an optional implementation, the rotation center may coincide with the first optical focus of the primary reflector.

In an optional implementation, a connection mechanism is provided in the primary reflector, and the two secondary reflectors are connected to the primary reflector by using the connection mechanism. The connection mechanism includes two driving units. One of the driving units is configured to drive the two secondary reflectors to rotate around the rotation center in the plane perpendicular to the symmetric surface of the two secondary reflectors, and the other driving unit is configured to drive the two secondary reflectors to rotate around the rotation center in the symmetric surface of the two secondary reflectors, so that the secondary reflectors and the primary reflector may be flexibly connected.

In an optional implementation, a material of the isolation plate may be but is not limited to a wave-absorbing material or a metal material. Therefore, the isolation of the isolation plate between the two feeds may be greater than 100 dB.

In an optional implementation, the feeds may include but are not limited to one of a single-band horn feed, a dielectric-loaded feed, or a coaxial dual-band feed.

In an optional implementation, the full-duplex antenna apparatus may further include waveguides, where the waveguides are configured to connect the feeds to a radio frequency module.

In an optional implementation, orthomode transducers may be disposed at ends that are of the waveguides and that are away from the feeds, and the orthomode transducers are configured to be connected to the radio frequency module.

For data in the foregoing possible implementations of this application, for example, data such as the straight-line distance between the rotation center and the first optical focus of the primary reflector, during measurement, a value within an engineering measurement error range should be understood as falling within a range limited in this application.

According to a second aspect, this application further provides a communication system. The communication system includes a processor, a radio frequency module connected to the processor, and the full-duplex antenna apparatus connected to the radio frequency module according to the first aspect of this application.

For technical effects that can be achieved in the second aspect, refer to corresponding effect descriptions in the first aspect. Details are not described herein again.

### BRIEF DESCRIPTION OF DRAWINGS

FIG. 1 is a diagram of an application scenario of a full-duplex antenna apparatus;
FIG. 2 is a diagram of a structure of a full-duplex antenna apparatus;
FIG. 3 is a diagram of a position relationship between a primary reflector and two secondary reflectors in an axial direction of the primary reflector according to an embodiment;
FIG. 4 is a diagram of a structure of a connection between secondary reflectors and a drive mechanism according to an embodiment;
FIG. 5 is a diagram of a structure of a feed according to an embodiment;
FIG. 6 is a diagram of a connection structure between a full-duplex antenna apparatus and a radio frequency module according to an embodiment; and
FIG. 7 is a diagram of a connection structure between a full-duplex antenna apparatus and a radio frequency module according to another embodiment.

### Reference numerals:

001: transmit antenna; 002: receive antenna; 10: full-duplex antenna apparatus; 11: primary reflector; 111: first reflective surface;
11a: first reflection zone; 11b: second reflection zone; 12: isolation plate; 13: secondary reflector; 13a: first secondary reflector;
13b: second secondary reflector; 14: feed; 14a: first feed; 14b: second feed; 15: waveguide; 20: drive mechanism;
21: first driving unit; 211: first motor; 212: first rotating shaft; 22: second driving unit; 221: second motor;
222: second rotating shaft; 30: radio frequency module; 40: orthomode transducer.

### DESCRIPTION OF EMBODIMENTS

To make objectives, technical solutions, and advantages of this application clearer, the following further describes this application in detail with reference to accompanying drawings.

Terms used in the following embodiments are merely intended to describe specific embodiments, but are not intended to limit this application. As used in the specification and the appended claims of this application, the singular expressions "a/an", "one", "said", "the foregoing", "the", and "this" are intended to include such expressions as "one or more", unless otherwise clearly indicated in the context.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but not limited to", unless otherwise specifically emphasized in another manner.

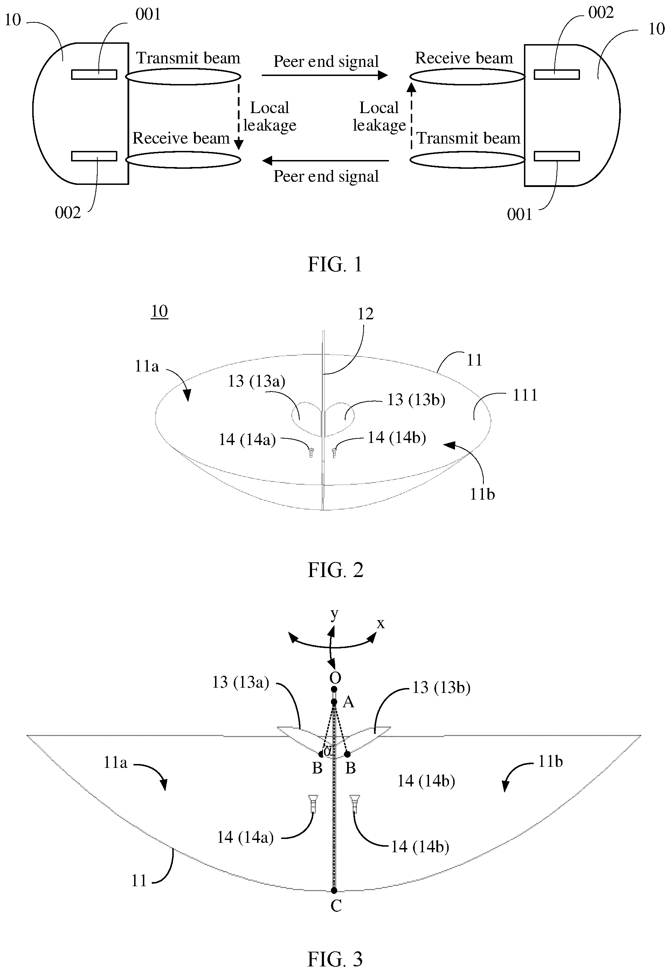

A full-duplex antenna apparatus may be used in point-to-point microwave transmission. For ease of understanding the full-duplex antenna apparatus, the following first briefly explains an application scenario of the full-duplex antenna apparatus. FIG. 1 is a diagram of an application scenario of a full-duplex antenna apparatus. As shown in FIG. 1, during signal transmission between two full-duplex antenna apparatuses, a transmit beam is transmitted by a transmit antenna 001 of one of the full-duplex antenna apparatuses to the other full-duplex antenna apparatus, and is received by a receive antenna 002 of the other full-duplex antenna apparatus. A transmit beam of a transmit antenna at a local end may also be received by a receive antenna at the local end. This phenomenon is referred to as local leakage. Due to the phenomenon of local leakage, signal receiving at the local end is interfered with. To reduce impact of the local leakage on signal receiving, this application provides a full-duplex antenna apparatus below.

FIG. 2 is a diagram of a structure of a full-duplex antenna apparatus. As shown in FIG. 2, in this application, the full-duplex antenna apparatus includes a primary reflector 11, an isolation plate 12, two secondary reflectors 13, and two feeds 14.

Refer to FIG. 2. In this embodiment of this application, the primary reflector 11 may be a rotating parabolic reflector, and a structure of the primary reflector 11 may be equivalently formed by parabolic rotation. The primary reflector 11 has a first reflective surface 111 and a first optical focus. The first reflective surface 111 is a surface on a concave surface side of the primary reflector 11. After being transmitted by the first reflective surface 111, parallel beams from the outside may be converged to the first optical focus.

Still refer to FIG. 2. In this embodiment of this application, the isolation plate 12 may be of a flat plate structure. The isolation plate 12 is disposed on one side of the first reflective surface 111 of the primary reflector 11, and is connected to the first reflective surface 111. In an embodiment, a plate surface of the isolation plate 12 may be perpendicular to an aperture of the primary reflector 11. For example, the plate surface of the isolation plate 12 may divide the first reflective surface 111 into two reflection zones through an axis of the primary reflector 11, and the two reflection zones are respectively denoted as a first reflection zone 11a and a second reflection zone 11b. The two reflection zones may be symmetrically arranged with respect to the isolation plate 12.

Still refer to FIG. 2. In this embodiment of this application, the two secondary reflectors 13 are respectively denoted as a first secondary reflector 13a and a second secondary reflector 13b. The two secondary reflectors 13 may be fastened to the primary reflector 11 by using a connection mechanism. The first secondary reflector 13a and the second secondary reflector 13b are respectively located on two sides of the isolation plate 12. For example, the first secondary reflector 13a is located in the first reflection zone 11a, and the second secondary reflector 13b is located in the second reflection zone 11b. Both the first secondary reflector 13a and the second secondary reflector 13b are rotating hyperbolic reflectors. The first secondary reflector 13a and the second secondary reflector 13b may be arranged in a mirrored manner with respect to the isolation plate 12.

The first secondary reflector 13a has a second optical focus and a third optical focus. The second optical focus coincides with the first optical focus of the primary reflector 11. The third optical focus is located on the other side that is of the first secondary reflector 13a and that is opposite to the second optical focus. The second secondary reflector 13b has a fourth optical focus and a fifth optical focus. The fourth optical focus coincides with the first optical focus of the primary reflector 11. The fifth optical focus is located on the other side that is of the second secondary reflector 13b and that is opposite to the fourth optical focus.

FIG. 3 is a diagram of a position relationship between a primary reflector and two secondary reflectors in an axial direction of the primary reflector according to an embodiment. As shown in FIG. 3, in an optional embodiment, a connection line between a first optical focus A of the primary reflector 11 and a dimple B of either of the secondary reflectors 13 is a first connection line, a connection line between the first optical focus A of the primary reflector 11 and a geometric center C of the primary reflector 11 is a second connection line, and a range of an included angle α between the first connection line and the second connection line may fall between 10° and 30°.

Refer to FIG. 3. In an optional embodiment of this application, the two secondary reflectors 13 can rotate around a rotation center O in a plane perpendicular to a symmetric surface of the two secondary reflectors 13. A rotation direction is a direction x as shown in FIG. 3. Therefore, the two secondary reflectors 13 may generate a change of a horizontal angle relative to the primary reflector 11, to change a beam transmission direction.

Still refer to FIG. 3. In an optional embodiment, the two secondary reflectors 13 can alternatively rotate around the rotation center O in the symmetric surface of the two secondary reflectors 13. A rotation direction is a direction y as shown in FIG. 3. Therefore, the two secondary reflectors 13 may generate a change of a pitch angle relative to the primary reflector 11, to change a beam transmission direction. A straight-line distance between the rotation center O and the first optical focus A of the primary reflector 11 may be less than or equal to 25 mm. In an optional embodiment, the rotation center O may be directly the first optical focus A of the primary reflector 11, to improve beam sweeping performance.

The change of a horizontal angle and the change of a pitch angle of the two secondary reflectors may be implemented by using a drive mechanism.

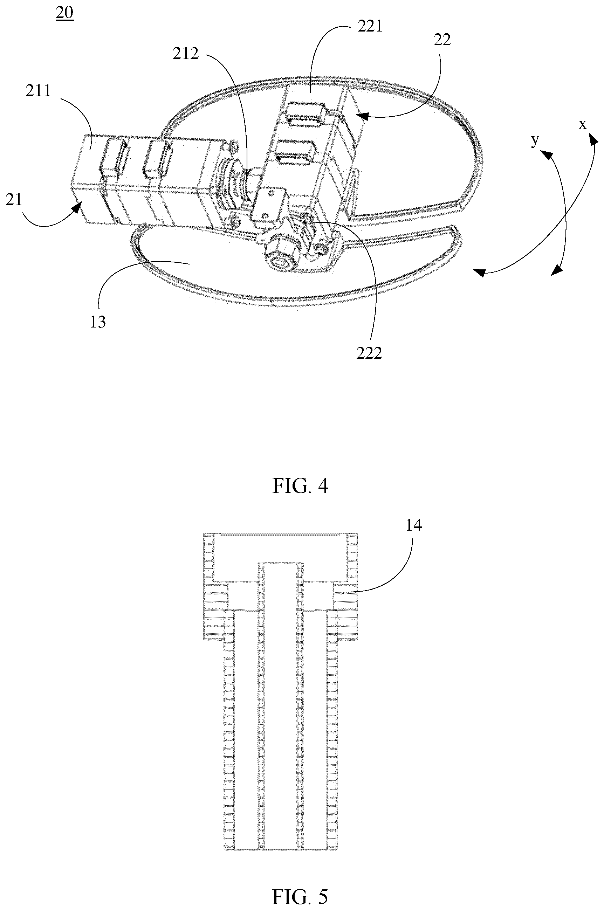

FIG. 4 is a diagram of a structure of a connection between secondary reflectors and a drive mechanism according to an embodiment. As shown in FIG. 4, in an embodiment, the drive mechanism 20 may include two driving units, and the two driving units are respectively denoted as a first driving unit 21 and a second driving unit 22. The first driving unit 21 is configured to drive the two secondary reflectors 13 to rotate in a plane perpendicular to a symmetric surface of the two secondary reflectors 13, to implement a change of a horizontal angle. The second driving unit 22 is configured to drive the two secondary reflectors 13 to rotate in the symmetric surface of the two secondary reflectors 13, to implement a change of a pitch angle.

Refer to FIG. 4. The first driving unit 21 may include a first motor 211 and a first rotating shaft 212. The second driving unit 22 may include a second motor 221 and a second rotating shaft 222. The second driving unit 22 is connected to an output end of the first rotating shaft 212. Both the two secondary reflectors 13 are fastened to an output end of the second rotating shaft 222. When the first motor 211 drives the first rotating shaft 212 to rotate, the first rotating shaft 212 drives the second driving unit 22 and the two secondary reflectors 13 to rotate around a rotation center in the plane perpendicular to the symmetric surface of the two secondary reflectors 13, in other words, rotate in a direction x shown in the figure. When the second motor 221 drives the second rotating shaft 222 to rotate, the second rotating shaft 222 drives the two secondary reflectors 13 and the first driving unit 21 to rotate around the rotation center in the symmetric surface of the two secondary reflectors 13, in other words, rotate in a direction y shown in the figure.

When the two secondary reflectors 13 rotate, a beam pointing direction of the full-duplex antenna apparatus 10 changes with a swing angle of the secondary reflectors 13. Therefore, the full-duplex antenna apparatus 10 can implement beam sweeping within a specific angle range. In addition, a direction of a beam may be controlled by rotating the two secondary reflectors 13 during using the full-duplex antenna apparatus 10, to avoid receiving channel interference caused by electromagnetic wave reflection.

The foregoing describes the primary reflector 11, the isolation plate 12, and the two secondary reflectors 13. The following further describes a feed 14 in this application with reference to the accompanying drawings.

Refer to both FIG. 2 and FIG. 3 together. The two feeds 14 in embodiments of this application are respectively denoted as a first feed 14a and a second feed 14b. The first feed 14a and the second feed 14b are respectively located on the two sides of the isolation plate 12. For example, the first feed 14a is located in the first reflection zone 11a, and the second feed 14b is located in the second reflection zone 11b. The first feed 14a and the second feed 14b may be arranged in a mirrored manner with respect to the isolation plate 12. When being arranged, the first feed 14a may be located at the third optical focus of the first secondary reflector 13a. When being arranged, the second feed 14b may be located at the fifth optical focus of the second secondary reflector 13b. The two feeds 14 may be fastened to the primary reflector 11 by using mechanical parts (not shown in FIG. 2 and FIG. 3). The mechanical parts may be, for example, waveguides. Ends of the waveguides may be connected to the feeds 14, and the other ends may be configured to be connected to a radio frequency module.

The isolation plate 12 is configured to block transmission of electromagnetic wave signals between the first feed 14a and the second feed 14b. An electromagnetic wave between the feed 14 in either reflection zone and the primary reflector 11 is reflected and transmitted by the secondary reflector 13 corresponding to the reflection zone. A material of the isolation plate 12 may be a wave-absorbing material or a metal material. Isolation of the isolation plate 12 between the two feeds 14 may be greater than 100 dB by using a wave-absorbing material or a metal material, to effectively suppress loopback noise caused by signal leakage between the two feeds 14 at the local end.

Still refer to FIG. 2 and FIG. 3. After the feeds 14 are installed and fixed, the two feeds 14 irradiate the secondary reflectors 13, and beam pointing directions of the full-duplex antenna apparatus 10 may be adjusted based on an electrical performance requirement of the full-duplex antenna apparatus 10 and an engineering implementation difficulty. In consideration of engineering implementability, pointing directions of the two feeds 14 may be directions perpendicular to the aperture of the primary reflector 11, so that good antenna performance can be implemented. After beams generated by the feeds 14 irradiate the secondary reflectors 13, the beams are reflected by the secondary reflectors 13 and then irradiate the primary reflector, and then reflected by the primary reflector 11 to form a high-gain beam. The two feeds 14 include, but are not limited to, one of a single-band horn feed, a dielectric-loaded feed, or a coaxial dual-band feed.

FIG. 5 is a diagram of a structure of a feed according to an embodiment. As shown in FIG. 5, the feed 14 may be a coaxial dual-band feed. The coaxial dual-band feed may have two operating frequency bands: f_{L1} to f_{H1} and f_{L2} to f_{H2}. Phase centers of the feed 14 within two frequency bands coincide with each other.

In the full-duplex antenna apparatus in this application, in addition to the feed, another structure has no frequency selectivity. Therefore, when the coaxial dual-band feed is used, the full-duplex antenna apparatus may work at two frequency bands.

Refer to FIG. 1 and FIG. 2 together. In the full-duplex antenna apparatus 10 in embodiments of this application, the first secondary reflector 13a and the first feed 14a in the first reflection zone 11a may be configured to transmit an electromagnetic wave signal to a remote end. For example, in the first reflection zone 11a, the first feed 14a transmits, to the primary reflector 11, a to-be-transmitted electromagnetic wave signal that has been reflected by the first secondary reflector 13a, and the primary reflector 11 transmits the to-be-transmitted electromagnetic wave signal to the remote end. The second secondary reflector 13b and the second feed 14b in the second reflection zone 11b may be configured to receive an electromagnetic wave signal transmitted from the remote end. For example, in the second reflection zone 11b, the primary reflector 11 transmits, to the second feed 14b, the electromagnetic wave signal from the remote end that has been reflected by the second secondary reflector 13b. Therefore, the isolation plate is disposed in the full-duplex antenna apparatus 10 in embodiments of this application, and may divide the first reflective surface into two reflection zones, to avoid the receive antenna of the local end being affected by a signal transmitted by the transmit antenna of the local end when receiving a signal, avoiding a problem of receiving and sending interference, and further implementing receiving and sending of co-frequency co-time signals. In addition, the full-duplex antenna apparatus 10 in embodiments of this application can increase channel bandwidth and enhance a communication capability without wasting spectrum resources and time resources.

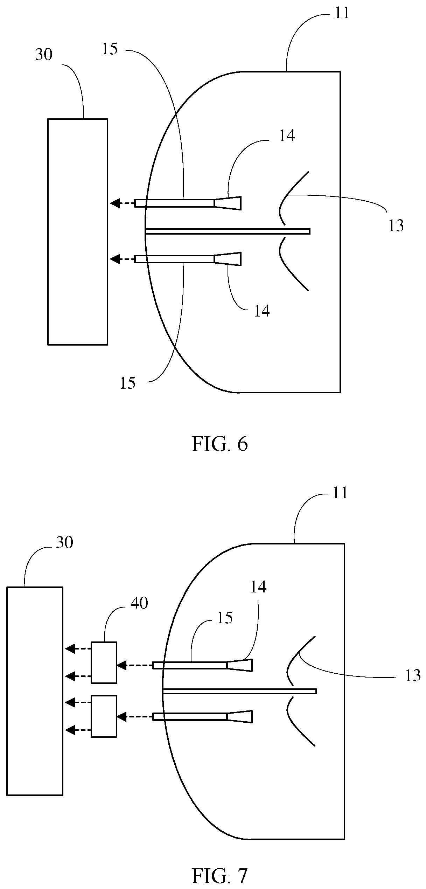

FIG. 6 is a diagram of a connection structure between a full-duplex antenna apparatus and a radio frequency module according to an embodiment. As shown in FIG. 6, two feeds 14 may be connected to the radio frequency module 30 by using waveguides 15. Electromagnetic wave signals received by the feeds 14 may be transmitted to the radio frequency module 30 by using the waveguides 15, and the radio frequency module 30 converts the received electromagnetic wave signals, to convert the electromagnetic wave signals into electrical signals.

FIG. 7 is a diagram of a connection structure between a full-duplex antenna apparatus and a radio frequency module according to another embodiment. As shown in FIG. 7, when a feed 14 is a dual-polarized feed, orthomode transducers (orthomode transducer, OMT) 40 may be further arranged between the full-duplex antenna apparatus 10 and the radio frequency module 30, to implement decomposition of dual-polarized signals. As shown in FIG. 7, the OMTs 40 have two antenna side ports and four device side ports. The two antenna side ports are connected to the feeds 14. The four device side ports are all connected to the radio frequency module 30. The four device side ports are configured to transmit and receive dual-polarized signals, to implement co-frequency co-time dual-polarized full-duplex communication.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A full-duplex antenna apparatus, comprising:
a primary reflector, having a first reflective surface;
an isolation plate, disposed on one side of the first reflective surface and fastened to the first reflective surface, and dividing the first reflective surface into two reflection zones;
two secondary reflectors, disposed on one side of the first reflective surface, wherein the two secondary reflectors are respectively disposed on two sides of the isolation plate; and
two feeds, disposed on one side of the first reflective surface, wherein the two feeds are respectively located on two sides of the isolation plate, one of the two feeds is configured to transmit an electromagnetic wave signal to a receive end of a remote end, and the other feed is configured to receive an electromagnetic wave signal sent by a transmit end of the remote end; wherein
the isolation plate is configured to block transmission of electromagnetic wave signals between the two feeds; in one of the reflection zones, the feed is configured to transmit, to the primary reflector, a to-be-transmitted electromagnetic wave signal that has been reflected by the secondary reflector in the reflection zone, and the primary reflector sends the to-be-transmitted electromagnetic wave signal to the remote end; and in the other reflection zone, the primary reflector is configured to transmit, to the feed in the reflection zone, an electromagnetic wave signal from the remote end that has been reflected by the secondary reflector in the reflection zone.

2. The full-duplex antenna apparatus according to claim 1, wherein the isolation plate and an aperture of the primary reflector are perpendicularly arranged, and the two reflection zones are symmetrically arranged along the isolation plate.

3. The full-duplex antenna apparatus according to claim 2, wherein the two secondary reflectors are symmetrically arranged along the isolation plate.

4. The full-duplex antenna apparatus according to claim 2 or 3, wherein the two feeds are symmetrically arranged along the isolation plate.

5. The full-duplex antenna apparatus according to any one of claims 1 to 4, wherein the primary reflector is a rotating parabolic reflector, and the secondary reflectors are rotating hyperbolic reflectors;
the primary reflector has a first optical focus, and each of the secondary reflectors has two optical focuses; and
in any one of the reflection zones, the feed is located at one optical focus of the secondary reflector, and the first optical focus of the primary reflector coincides with the other optical focus of the secondary reflector.

6. The full-duplex antenna apparatus according to claim 5, wherein a connection line between the first optical focus and a dimple of either of the secondary reflectors is a first connection line, a connection line between the first optical focus and a geometric center of the primary reflector is a second connection line, and an included angle between the first connection line and the second connection line ranges from 10° to 30°.

7. The full-duplex antenna apparatus according to claim 5 or 6, wherein the two secondary reflectors can rotate around a rotation center in a plane perpendicular to a symmetric surface of the two secondary reflectors, and a straight-line distance between the rotation center and the first optical focus is less than or equal to 25 mm.

8. The full-duplex antenna apparatus according to any one of claims 5 to 7, wherein the two secondary reflectors can rotate around the rotation center in the symmetric surface of the two secondary reflectors, and the straight-line distance between the rotation center and the first optical focus is less than or equal to 25 mm.

9. The full-duplex antenna apparatus according to claim 7 or 8, wherein the full-duplex antenna apparatus comprises a drive mechanism, the drive mechanism comprises two driving units, one of the driving units is configured to drive the two secondary reflectors to rotate around the rotation center in the plane perpendicular to the symmetric surface of the two secondary reflectors, and the other driving unit is configured to drive the two secondary reflectors to rotate around the rotation center in the symmetric surface of the two secondary reflectors.

10. The full-duplex antenna apparatus according to any one of claims 7 to 9, wherein the rotation center coincides with the first optical focus.

11. The full-duplex antenna apparatus according to any one of claims 1 to 10, wherein a material of the isolation plate is a wave-absorbing material or a metal material, and isolation of the isolation plate between the two feeds is greater than 100 dB.

12. The full-duplex antenna apparatus according to any one of claims 1 to 11, wherein the feeds comprise one of a single-band horn feed, a dielectric-loaded feed, or a coaxial dual-band feed.

13. The full-duplex antenna apparatus according to any one of claims 1 to 12, further comprising waveguides, wherein the waveguides are configured to connect the feeds to a radio frequency module.

14. The full-duplex antenna apparatus according to claim 13, wherein orthomode transducers are disposed at ends that are of the waveguides and that are away from the feeds, and the orthomode transducers are configured to be connected to the radio frequency module.

15. A communication system, comprising a processor, a radio frequency module connected to the processor, and the full-duplex antenna apparatus connected to the radio frequency module according to any one of claims 1 to 14.
